# EUROPEAN PATENT SPECIFICATION

(11) **EP 1 584 654 B1**
(45) Date of publication and mention of the grant of the patent: **20.12.2006**
(21) Application number: 04101425.9
(22) Date of filing: 06.04.2004
(51) Int. Cl.: C08L 23/22, C08L 53/02

(54) **Butyl rubber based sealant**
Dichtung auf Basis von Butylkautschuk
Produit d'étanchéité à base de caoutchouc butyl

(43) Date of publication of application: 12.10.2005
(73) Proprietor: KRATON Polymers Research B.V., 1030 BH Amsterdam (NL)
(72) Inventor: Vermunicht, Geert E.A. KRATON Polymers Res. S.A., 1348 OTTIGNIES, Louvain-La-Neuve (BE); Roumache, Olivier KRATON Polymers Res. S.A., B-1348, Ottignies-Louvain-La-Neuve (BE)
(74) Representative: Kortekaas, Marcel C.J.A.

(56) References cited:
- GB-A- 2 123 843
- US-A- 3 935 893
- US-A- 3 984 369
- US-A- 4 112 020
- US-A- 4 113 799

## Description

### Technical Field

The present invention relates to butyl rubber based sealants, modified with a hydrogenated styrenic block copolymer composition. More in particular the invention relates to hot melt systems based on the aforementioned sealant (hereafter hot melt butyl sealant).

### Background Art

Butyl rubber based sealant can be found in a variety of end-uses such as construction, insulating glass, automotive. Although they may be applied as a solvent based system, hot melt systems are increasingly used thereby avoiding the use of solvents and thus reducing health and environmental hazards. Commercially available hot melt butyl sealants, based on butyl rubber as sole thermoplastic component are recognized for their superb barrier properties. On the other hand, their cohesive strength and/or temperature resistance is insufficient to allow use as sole sealant in insulated glass window panes.

Hot melt sealant compositions comprising a blend of butyl rubber and hydrogenated styrenic block copolymers are known. For instance, in **US 4092282** compositions are described, composed of butyl rubber and a styrene-ethylene/butylenes-styrene block copolymer (SEBS) in about equal amount, together with a solid polyamide resin (as well as filler and such like common sealant components). In **US 4900770** a hot melt type seal agent is described composed of butyl rubber, SEBS, and an olefin wax. The weight ratio of the butyl rubber and SEBS is between 90:10 to 40:60, whereas the blend of butyl rubber and SEBS comprises about 20 to 50% by weight of the hot melt sealant. The SEBS used for this sealant is KRATON® G1650, with the grades G1652 and G-1726 mentioned as alternatives. Indeed G1650 is used at 5-18% by weight on the total weight of the sealant.

In **JP 02038116** hot melt type sealants are discussed as well, based on KRATON G1651. However, the sealants are rather based on a modified SEBS. In one comparative example 11 % by weight KRATON G1651 is used, without realizing that excellent hot melt polybutylene sealants could be had with less than 11 %.

Today double glazing windows are mostly prepared with a combination of polyurethane or polysulfide and polybutene sealants. European norms now under preparation, however, favor butyl sealants. These butyl sealants should be able to compete with the existing sealant compositions in terms of properties and price. Unfortunately, the sealants of the aforementioned US references do not provide a commercially attractive solution.

It is an object of the present invention to provide a hot melt butyl sealant having both superb barrier properties, and good cohesive strength and temperature resistance at an acceptable price.

### Disclosure of Invention"

Accordingly a butyl rubber based sealant is provided comprising, calculated on the sealant,
a) from 10 to 50% by weight (wt%) of butyl rubber,
b) a hydrogenated styrenic block copolymer having at least two resinous endblocks of polymerized monovinyl arene and an elastomeric midblock of polymerized and subsequently hydrogenated conjugated diene or dienes,
c) from 0 to 30 wt% of one or more polyolefins,
d) from 0 to 60 wt% of one or more plasticizers and
e) from 0 to 80 wt% of one or more fillers and filler deactivators,
f) from 0 to 30 wt% of one or more tackifying resins,
g) from 0 to 30 wt% of one or more other additives,
characterized in that component b) is a linear hydrogenated styrenic block copolymer having an apparent molecular weight in the range of from 200,000 to 500,000 or a radial hydrogenated styrenic block copolymer having an apparent molecular weight in the range of from n times 100,000 to 250,000, n equals the number of polymer arms, and component (a) has a content of hydrogenated 1,2-polymerized conjugated dienes (vinyl content) of greater than 40% and a content of poly(monovinyl arene) in the range of from 20 to 50%, wherein said hydrogenated styrenic block copolymer comprises no more than 5% by weight of the sealant and wherein said hydrogenated styrenic block copolymer comprises no more than 10% by weight of the butyl rubber/hydrogenated styrenic block copolymer blend.

It will be appreciated that another aspect of the invention is formed by the intermediate butyl rubber/hydrogenated styrenic block copolymer blend.

### Mode(s) for Carrying Out the Invention

Hydrogenated styrenic block copolymers are known in the art. By styrenic block copolymer is meant a block copolymer having at least two end-blocks A made of polymerized monovinyl arene, thus giving a glassy, (resinous) aromatic segment, and a mid-block B made up at least 50% of polymerized diene, thus giving an amorphous elastomeric segment. The polymers can be linear, as in A-B-A and A-B-A-B, but also radial, such as in (A-B)ₙ X, or mixtures thereof. Some A-B diblock polymer can be present up to an amount of 30% by weight or less. Generally, 20% by weight percent or less of the block copolymer is diblock, and it is preferred to have essentially no diblock. In the above radial formula the n is an integer of at greater than 2, generally 3 to 50, more generally 3 to 13, and the X is the remnant of a coupling agent or multifunctional monomer such as divinylbenzene.

The A-B-A compositions can be made by either sequential polymerization or coupling. In the sequential polymerization technique, the monovinyl arene is first introduced to produce an aromatic block followed by the introduction of the conjugated diene to produce the rubbery midblock followed by additional monovinyl arene to produce the other terminal aromatic block. This is broadly disclosed in **US 3231635** . The production of such polymers and also radial polymers is broadly disclosed in **US 5194530** . Another patent broadly disclosing the anionic polymerization of thermoplastic elastomers using an organo alkali metal initiator is **US 4764572** .

The aromatic component can be any 8-30 carbon atom monoalkenyl aromatic compound or mixture thereof, such as styrene and substituted styrenes such as alpha-methyl-styrene and 1,1-diphenyl-ethene, but preferably is styrene.

The diene can be any 4 to 8 carbon atom conjugated diene or mixtures thereof but is preferably 1,3-butadiene or isoprene, most preferably 1,3-butadiene.

When the diene is butadiene the polymerization may be carried out using a polar compound as is known in the art to give increased levels of vinyl.

It is well known in the art to drive the polymerization toward the 1,2-addition of butadiene. Broadly, this can be done by utilizing an organic polar compound such as an ether, including cyclic ethers, polyethers and thioethers or an amine including secondary and tertiary amines. Preferred are chelating ethers and amines. By chelating ether is meant an ether having more than one oxygen as exemplified by the formula R(OR')ₘ (OR")ₒ OR where each R is individually selected from 1 to 8, preferably 2 to 3, carbon atom alkyl radicals; R' and R" are individually selected from 1 to 6, preferably 2 to 3, carbon atom alkylene radicals; and m and o are independently selected integers of 1-3, preferably 1-2. One of m or o can be zero. Examples of preferred ethers include diethoxypropane, 1,2-dioxyethane (dioxo) and 1,2-dimethyoxyethane (glyme). Other suitable materials include CH₃ -OCH₂ -CH₂ -OCH₂ -CH₂ -OCH₃ (diglyme) and CH₃ CH₂ -OCH₂ -CH₂ -OCH₂ -CH₂ -OCH₂ -CH₃ . By chelating amine is meant an amine having more than 1 nitrogen such as N,N,N',N'-tetramethylethylene diamine. Monoamines are operable but less preferred. Less preferred also (but still operable) are straight chain and cyclic monoethers such as dimethylether, diethylether, anisole, and tetrahydrofuran.

This microstructure promoter is used in an amount of at least 0.1 moles per mole of organo alkalimetal initiator, such as an organolithium initiator, preferably 1-50, more preferably 2-25, moles of promoter per mole of the initiator. Alternatively, the concentration can be expressed in parts per million by weight based on the total weight of solvent and monomer. Based on this criteria from 10 parts per million to about 1 weight percent, preferably 100 parts per million to 2000 parts per million are used. This can vary widely, however, since extremely small amounts of some of the preferred promoters are very effective. At the other extreme, particularly with less effective promoters, the promoter itself can be the solvent. Again, these techniques are well known in the art, disclosed for instance in **US 3231635 , US 5194530** and **US 4764572** .

The resulting 1,2-vinyl content for the polymers useful in this invention is at least 40 mole percent, preferably at most 90, more preferably at least 50, even more preferably 65-90, most preferably 65-80 mole percent.

The styrenic block copolymer as it is actually used in this invention is hydrogenated and hence there is little or no vinyl unsaturation left. Nonetheless, it is still a high 1,2 addition polymer (from a high vinyl precursor). Even the hydrogenated product is typically referred to as "high vinyl" because of its origin.

The styrenic block copolymers utilized in the compositions of this invention are saturated polymers in the sense that they contain little or no aliphatic unsaturation. Generally, the styrenic block copolymers as produced contain aliphatic unsaturation and are selectively hydrogenated so as to remove most of the aliphatic unsaturation in the polymer backbone. By selective hydrogenation is meant that the aliphatic unsaturation is significantly removed while leaving unaffected most of the aromatic unsaturation. Suitable known catalysts for accomplishing this include nickel compounds in combination with a reducing agent such as an aluminum alkyl. Hydrogenation is taught in **US 3231635 , US 5194530 , US 4764572** and **US 3231635**.

Each individual aromatic endblock must have a molecular weight of less than 20,000. Preferably the endblocks have a molecular weight within the range of 5,000 to 20,000, most preferably 5,000 to 15,000.

The molecular weight of the copolymer will generally be at least 200,000. For linear A-B-A polymers, the molecular weight will generally be within the range of 200,000 to 500,000. Actually, the upper limit is dictated by viscosity considerations and can be as high as can be tolerated and still be processable. The most preferred molecular weight for linear A-B-A polymers is 250,000 to 350,000. With radial polymers, the molecular weight can be much higher since these polymers have a lower viscosity for a given total molecular weight. In general, it is easier to refer to the molecular weight of the arms, which will be half of the molecular weight discussed for linear A-B-A discussed above. Thus, for radial polymers having about 4 arms, the molecular weight generally will be in the range of 400,000 to 1 million, preferably 500,000 to 700,000. These polymers are generally referred to as high MW polymers.

For the composition of the invention, the nature of the monomers or the linearity is not a very determining factor. What is important is that a polymer is used having a relatively high molecular weight in combination with a relatively high vinyl content (e.g., the percentage of conjugated butadiene built into the polymer backbone by 1,2-addition rather than 1,4-addition, or similar in case of a higher conjugated diene), and a content of poly(monovinyl arene) in the range of from 20 to 50%.

The apparent molecular weights of the complete block copolymers and each of the intermediate precursors have been determined by Gel Permeation Chromatography, and expressed in terms of standard poly(styrene) (analogous to the method described in ASTM D5296-97).

Block copolymers utilized in this invention, which are hydrogenated to remove the aliphatic unsaturation as noted hereinabove, can be viewed for instance in the case of butadiene as S-EB-S polymers, the S referring to the monovinyl arene, generally styrene, endblocks. The EB represents ethylene/butylene which is the structure resulting from the hydrogenation of polymerized 1,3-butadiene. With isoprene the designation would be S-EP-S, the EP representing ethylene/propylene.

Such copolymers are commercially available as, for instance, KRATON® G polymers.

Preferred hydrogenated block copolymers according to the present invention have molecular weights in the range of 100.000 to 400.000. Suitable examples thereof, prepared by KRATON Polymers are the grades commercialized as G1651, E1818 and MD6933. Also suitable are the grades TUFTEC™ 1285F and JT52F prepared by ASAHI.

Butyl rubbers, being copolymers of isobutylene and isoprene, are also known in the art. Examples of suitable butyl rubbers comprise EXXON™ Butyl, grades 065, 165 and 365 prepared by ExxonMobil Chemical.

The butyl rubber component of the sealant may be a single component or a combination of butyl rubbers, and/or a combination with a polyisobutylene rubber. A suitable example of a polyisobutylene rubber is VISTANEX™ of ExxonMobil Chemical, for instance grade L-120.

The hot melt butyl sealant preferably comprises from 1 to 5, more preferably from 2 to 4 %wt of hydrogenated styrenic block copolymer and from 10 to 50, more preferably from 15 to 35 %wt of butyl rubber.

The remaining components of butyl rubber based sealant typically comprise other polyolefins in an amount up to 30 %wt; plasticizers in an amount up to 60 %wt; fillers in an amount up to 80 %wt, tackifying resins in an amount up to 30 %wt, and other additives such as colorants, anti-oxidants, thixotropic agents and the like in an amount up to 5 %wt.

Suitable examples of polyolefins include polyolefins such as polyethylene, polypropylene or amorphous polyolefins. Particularly suitable are amorphous polyolefins (APO'S); for instance EASTOFLEX™ E1003 from Eastman.

Plasticizers which may be used in the composition according to the present invention should be capable of being melt processed with other components of the composition without degrading.

Suitable plasticizers include oils, waxes and/or low molecular weight (viscous) polyolefins. Plasticizing oils are low aromatic content hydrocarbon oils that are paraffinic or naphthenic in character (carbon aromatic distribution < 5%, preferably < 2%, more preferably 0% as determined according to DIN 51378). Those products are commercially available from the Royal Dutch/Shell Group of companies, like SHELLFLEX™, CATENEX ™, and ONDINA™ oils. Other oils include KAYDOL™ oil from Witco, or TUFFLO™ oils from Arco or PRIMOL™ oils from ExxonMobil. Quite suitable are PRIMOL 352 and ONDINA 68.

Other plasticizers may also be added, instead of the plasticizing oil or in addition thereto. For instance olefin oligomers; low molecular weight polymers (< 30,000 g/mol) like liquid polybutene, liquid polyisoprene copolymers, liquid styrene/isoprene copolymers or liquid hydrogenated styrene/conjugated diene copolymers; vegetable oils and their derivatives; or paraffin and microcrystalline waxes may be used. Particularly suitable is INDOPOL™ L50, a liquid polyisobutylene from BP petrochemical having a Kinematic viscosity (ASTM D445) of between 94 and 100 cSt at 40°C.

More preferably the plasticizer or plasticizer blend is used in an amount of from 0 to 40%, relative to the weight of the complete composition.

It is known in the art that various other components can be added to manage the overall economics of the sealant such as fillers. Examples of such fillers include such as talc and chalk. For instance, DURCAL™ 5 may be used, a calcium carbonate from Omya, or ANKERMAG™ B20, a magnesium oxide from Magnifin. Clay is another filler that may be used. These fillers are typically used in combination with filler deactivators, such as EPON™ 1004, an epoxy compound. These fillers may be present in an amount of from 0 to 200 parts by weight, preferably from 50 to 150 pbw per 100 parts of component (a). (The amount of filler deactivator is typically about 1 to 2% by weight of the filler).

Suitable tackifying resins include C5, C9 hydrocarbon resins as well as hydrogenated or partially hydrogenated versions thereof. Suitable examples thereof are REGALITE™ R1090, a hydrogenated styrene/methyl styrene/indene copolymer, manufactured by Eastman, and the hydrogenated hydrocarbon resin ARKON™ P-100 from Arakawa.

Antioxidants and other stabilizing ingredients can also be added to protect the composition of the present invention from degradation induced by heat, light and processing or during storage.

Several types of antioxidants can be used, either primary antioxidants like hindered phenols or secondary antioxidants like phosphite derivatives or blends thereof. Particularly preferred is IRGANOX™ 1010 alone or in combination with IRGANOX PS800. These antioxidants are generally present in an amount within the range of 0.01 to 4, preferably 0.1 to 1 pbw per 100 parts of component (a).

### Preparation of the composition

No particular limitation is imposed on the preparation process of the sealants according to the present invention.

Therefore, there may be used any process such as a mechanically mixing process making use of rolls, a Banbury mixer or a Z-blade paddle mixer, or twin-screw extruder, thereby obtaining an intimate solution of the composition aimed at.

Dry blending the hydrogenated block copolymer with all liquid ingredients prior to the addition of the butyl rubber may ease the dissolution by reducing the (apparent) viscosity of the block copolymer.

### Use of the composition

The sealant according to the present invention is used for double window planes, where their properties of higher resistance to tearing/thinning; improved release/handling in processing and reduced cold flow is most appreciated, whilst showing improved (faster) stress relaxation, faster extrusion time/shorter mixing cycle; better extrudate/calendered surface quality with less shrinkage of extruded/calendered products for better dimensional stability. Other uses comprise as sealant or filler in car parts (" Automotive Use") and in other construction materials. It can also be used as glue.

The present invention will hereinafter be described more specifically by reference to the following examples and comparative examples, however without restricting its scope to these specific embodiments.

Incidentally, all designations of "parts" and "%" as will be used in the following examples mean parts by weight and wt% unless expressly noted otherwise.

### Examples

Details of the ingredients used in the examples can be found in Table 1.

**Table 1**

| Trade name | Details (supplier) |
|---|---|
| SEBS-1 | Styrene-ethylene/butylene-styrene block copolymer, linear, MW of -290,000, about 70% 1,2-vinyl content and polystyrene content of ~32% |
| SEBS-2 | Styrene-ethylene/butylene-styrene block copolymer, linear, MW of -90,000, about 50% 1,2-vinyl content and polystyrene content of ~30% |
| Butyl 065 | A copolymer of isobutylene and isoprene with low mooney viscosity manufactured by ExxonMobil Chemical |
| VISTANEX™ L120 | A polyisobutylene with a Molecular weight Viscosity average of about 1.25 x 10⁶ manufactured by ExxonMobil Chemical |
| PRIMOL™ 352 | A paraffin oil manufactured by ExxonMobil Chemical |
| REGALITE™ 1090 | A fully hydrogenated styrene/methyl styrene/indene copolymer manufactured by Eastman |

Sealants were prepared by dry blending the SEBS with all liquid ingredients prior to addition of the butyl rubber. Next, compositions were made on a Brabender internal mixer. The relevant physical properties of the sealants have been specified in Table 2.

### Test methods

- Creep and recovery with a stress of 100Pa. for 30min. and a recovery time of 30min without stress. Haake rheometer, plate-plate 35mm configuration. Sealant is applied at a temperature of 150°C, cooled down to 50°C for 5min. before measurement.

**Table 2**

| | Reference composition (parts by weight) | |
|---|---|---|
| | Butyl 065 (butyl rubber) | 30 |
| | VISTANEX L120 (polyisobutylene) | 20 |
| | PRIMOL 352 (plasticizer oil) | 20 |
| | REGALITE 1090 (resin) | 30 |
| | Reference | |
| | Max deformation at 100°C | |
| sealant 1 | Reference | 85 |
| sealant 2 | Reference + 2 %wt SEBS-1 | 45 |
| sealant 3 | Reference + 3 %wt SEBS-1 | 22 |
| sealant 4 | Reference + 4 %wt SEBS-1 | 43 |
| sealant 5 | Reference + 5 %wt SEBS-1 | 35 |
| | Comparative samples | |
| | Max deformation at 100°C | |
| sealant 1 | Reference | 85 |
| sealant 6 | Reference + 3 %wt SEBS-2 | 67 |
| sealant 7 | Reference + 5 %wt SEBS-2 | 46 |

It will be appreciated from the results in Table 2 that sealants 2 to 5 provide high resistance to deformation lacking in the comparative samples (1, 6 and 7).

## Claims

1. A butyl rubber based sealant comprising, calculated on the sealant,
a) from 10 to 50% by weight (wt%) of butyl rubber,
b) a hydrogenated styrenic block copolymer having at least two resinous endblocks of polymerized monovinyl arene and an elastomeric midblock of polymerized and subsequently hydrogenated conjugated diene or dienes,
c) from 0 to 30 wt% of one or more polyolefins,
d) from 0 to 60 wt% of one or more plasticizers and
e) from 0 to 80 wt% of one or more fillers and filler deactivators,
f) from 0 to 30 wt% of one or more tackifying resins,
g) from 0 to 30 wt% of one or more other additives,
**characterized in that** component b) is a linear hydrogenated styrenic block copolymer having an apparent molecular weight in the range of from 200,000 to 500,000 or a radial hydrogenated styrenic block copolymer having an apparent molecular weight in the range of from n times 100,000 to 250,000, n equals the number of polymer arms, and component (a) has a content of hydrogenated 1,2-polymerized conjugated dienes (vinyl content) of greater than 40% and a content of poly(monovinyl arene) in the range of from 20 to 50%, wherein said hydrogenated styrenic block copolymer comprises no more than 5% by weight of the sealant and wherein said hydrogenated styrenic block copolymer comprises no more than 10% by weight of the butyl rubber/hydrogenated styrenic block copolymer blend.

2. A butyl rubber sealant according to claim 1, comprising from 1 to 5 %wt of hydrogenated styrenic block copolymer.

3. A butyl rubber sealant according to claim 1, comprising from 2 to 4 %wt of hydrogenated styrenic block copolymer.

4. A butyl rubber sealant according to claim 1, comprising from 15 to 35 %wt of butyl rubber.

## Patentansprüche

1. Dichtung auf Basis von Butylkautschuk umfassend berechnet in Bezug auf die Dichtung:
a) 10-50 Gewichtsprozent (Gew.-%) Butylkautschuk,
b) ein hydriertes Styrolblockcopolymer, das wenigstens zwei Harz-Endblöcke aus polymerisiertem Monovinylaren und einen Elastomer-Mittelblock aus polymerisiertem und nachfolgend hydrierten konjugierten Dien oder Dienen aufweist,
c) 0-30 Gew.-% eines oder mehrerer Polyolefine,
d) 0-60 Gew.-% eines oder mehrerer Weichmacher und
e) 0-80 Gew.-% eines oder mehrerer Füllstoffe und Füllstoffdeaktivatoren,
f) 0-30 Gew.-% eines oder mehrerer Harze zur Erhöhung der Klebrigkeit,
g) 0-30 Gew.-% eines oder mehrerer Additive,
**dadurch gekennzeichnet, dass** Bestandteil b) ein lineares hydriertes Styrolblockcopolymer ist, das ein scheinbares Molekulargewicht im Bereich von 200.000 bis 500.000 aufweist oder ein radiales hydriertes Styrolblockcopolymer ist, das ein scheinbares Molekulargewicht im Bereich von n*100.000 bis 250.000 aufweist, wobei n der Anzahl der Polymerarme entspricht, und Bestandteil a) einen Gehalt an hydriertem 1,2-polymerisierten konjugierten Dienen (Vinylgehalt) von mehr als 40% und einem Gehalt an Poly(monovinylaren) im Bereich von 20-50% aufweist, und worin das hydrierte Styrol-Blockcopolymer nicht mehr als 5 Gew.-% der Dichtung umfasst und worin das hydrierte Styrolblockcopolymer nicht mehr als 10 Gew.-% der Mischung aus Butylkautschuk/hydriertem Styrolblockcopolymer umfasst.

2. Butylkautschuk-Dichtung nach Anspruch 1, umfassend 1-5 Gew.-% des hydrierten Styrolblockcopolymers.

3. Butylkautschuk-Dichtung nach Anspruch 1, umfassend 2-4 Gew.-% des hydrierten Styrolblockcopolymers.

4. Butylkautschuk-Dichtung nach Anspruch 1, umfassend 15-35 Gew.-% Butylkautschuk.

## Revendications

1. Produit d'étanchéité à base de caoutchouc butyle, calculé par rapport au produit d'étanchéité,
a) de 10 à 50 % en poids (% en pds) de caoutchouc butyle,
b) un copolymère bloc styrénique hydrogéné comportant au moins deux blocs d'extrémité résineux d'arène mono-vinylique polymérisé et un bloc central élastomère de diène ou diènes conjugués polymérisés et ensuite hydrogénés,
c) de 0 à 30 % en pds d'une ou plusieurs polyoléfines,
d) de 0 à 60 % en pds d'un ou plusieurs plastifiants, et
e) de 0 à 80 % en pds d'une ou plusieurs charges et désactivateurs de charge,
f) de 0 à 30 % en pds d'une ou plusieurs résines assurant un collage,
g) de 0 à 30 % en pds d'un ou plusieurs additifs,
**caractérisé en ce que** le composant b) est un copolymère bloc styrénique hydrogéné linéaire ayant un poids moléculaire apparent allant de 200 000 à 500 000 ou un copolymère bloc styrénique hydrogéné radial ayant un poids moléculaire apparent allant de n fois 100 000 à 250 000, n est égal au nombre de branches de polymère, et le composant (a) a une teneur en diènes conjugués 1,2-polymérisés hydrogénés (teneur en vinyle) de plus de 40 % et une teneur en poly(arène vinylique) allant de 20 à 50 %, dans lequel le copolymère bloc styrénique hydrogéné précité ne constitue pas plus de 5 % en poids du produit d'étanchéité et dans lequel ledit copolymère bloc styrénique hydrogéné ne constitue pas plus de 10 % du mélange caoutchouc butyle/copolymère bloc styrénique hydrogéné.

2. Produit d'étanchéité à base de caoutchouc butyle suivant la revendication 1, comprenant de 1 à 5 % en pds de copolymère bloc styrénique hydrogéné.

3. Produit d'étanchéité à base de caoutchouc butyle suivant la revendication 1, comprenant de 2 à 4 % en pds de copolymère bloc styrénique hydrogéné.

4. Produit d'étanchéité à base de caoutchouc butyle suivant la revendication 1, comprenant de 15 à 35 % en pds de caoutchouc butyle.
